# EUROPÄISCHE PATENTSCHRIFT

(11) **EP 3 197 695 B1**
(45) Veröffentlichungstag und Bekanntmachung des Hinweises auf die Patenterteilung: **27.09.2023**
(21) Anmeldenummer: 15752982.7
(22) Anmeldetag: 06.08.2015
(51) Int. Cl.: B60H 1/00, F01P 7/16, B60H 1/03

(54) **SYSTEM UND VERFAHREN ZUR PRÄDIKTIVEN STEUERUNG UND/ODER REGELUNG EINER HEIZ-/KÜHLVORRICHTUNG EINES FAHRZEUGS**
SYSTEM AND METHOD FOR PREDICTIVELY CONTROLLING AND/OR REGULATING A HEATING/COOLING APPARATUS OF A VEHICLE
SYSTÈME ET PROCÉDÉ DE COMMANDE ET/OU DE RÉGULATION PRÉDICTIVE D'UN DISPOSITIF DE CHAUFFAGE/REFROIDISSEMENT D'UN VÉHICULE

(30) Priorität: 23.09.2014 DE 102014113753
(43) Veröffentlichungstag der Anmeldung: 02.08.2017
(73) Patentinhaber: Pierburg GmbH, 41460 Neuss (DE)
(72) Erfinder: HASSEL, Karl-Heinz, 76684 Östringen (DE); HOPP, Martin, 50858 Köln (DE)
(74) Vertreter: terpatent Patentanwälte ter Smitten Eberlein-Van Hoof Rütten Daubert
(86) Internationale Anmeldenummer: PCT/EP2015/068175
(87) Internationale Veröffentlichungsnummer: WO 2016/045860

(56) Entgegenhaltungen:
- EP-A2- 0 974 742
- WO-A1-01/34953
- DE-A1-102006 014 944
- DE-A1-102009 039 374
- DE-A1-102012 006 632
- FR-A1- 2 862 575

## Beschreibung

Die Erfindung betrifft ein Thermo-Steuerungssystem zur prädiktiven Steuerung und/oder Regelung einer Heiz-/Kühlvorrichtung zum Klimatisieren eines Fahrzeuginnenraums, wobei die Heiz-/Kühlvorrichtung einen von einem Kühlmittel durchströmbaren Kühlmittel-Kreislauf aufweist, der für einen Wärmeaustausch zwischen dem Kühlmittel und einem Fahrzeugaggregat mit einem Fahrzeugaggregat-Wärmetauscher verschaltbar ist, und das Thermo-Steuerungssystem eine Ansteuerungseinrichtung zum Ansteuern einer Kühlmittel-Pumpe und/oder zumindest eines Kühlmittel-Ventils zur Durchflussregulierung bzw. Leitungsverschaltung des Kühlmittel-Kreislaufs aufweist. Ferner betrifft die Erfindung ein Verfahren zur prädiktiven Steuerung und/oder Regelung einer solchen Heiz-/Kühlvorrichtung.

Derartige Heiz-/Kühlvorrichtungen sind aus dem Stand der Technik hinlänglich bekannt. Insbesondere bei modernen Elektro- oder Hybridfahrzeugen sind Heiz-/Kühlvorrichtungen bekannt, die einen als Wärmepumpe oder als Kältemaschine betreibbaren Kältemittel-Kreislauf aufweisen, der mit zumindest einem separat ausgebildeten Sekundär-Kreislauf, zumeist einem Kühlmittel-Kreislauf, verschaltet werden kann. Ein solcher Kühlmittel-Kreislauf kann zur Steigerung der Effizienz der Heiz-/Kühlvorrichtung mit verschiedenen Fahrzeugaggregaten, wie einem Verbrennungsmotor oder einer Batterie, über einen Fahrzeugaggregat-Wärmetauscher in einen Wärmeaustausch gebracht werden. Die hierbei von dem Kühlmittel aufgenommene Wärme oder Kälte kann zur Beheizung oder Kühlung des Kältemittels bzw. des Fahrzeuginnenraums verwendet werden.

Üblicherweise ist die Verschaltung eines solchen Kühlmittel-Kreislaufs mit einem jeweiligen Fahrzeugaggregat-Wärmetauscher dauerhaft, wobei der Kühlmittel-Kreislauf je nach Bedarf aktiviert oder deaktiviert wird. Bei anderen bekannten Heiz-/Kühlvorrichtungen kann eine wählbare Verschaltung des Kühlmittel-Kreislaufs mit verschiedenen Fahrzeugaggregaten vorgesehen sein. Hierbei erfolgt die Verschaltung des Kühlmittel-Kreislaufs in Abhängigkeit einer Temperatur des Fahrzeugaggregats. Dazu weisen solche Heiz-/Kühlvorrichtungen Temperatursensoren auf, mittels derer die Temperaturen der Fahrzeugaggregate überwacht werden. Liegt an einem Fahrzeugaggregat eine bestimmte Temperatur vor, wird der jeweilige Kühlmittel-Kreislauf aktiviert bzw. mit dem jeweiligen Fahrzeugaggregat-Wärmetauscher verschaltet.

Die WO 2012 075 975 A1 beschreibt eine solche Heiz-/Kühleinrichtung mit einem Kältemittel-Kreislauf, der über einen Verflüssiger und über einen Verdampfer jeweils mit einem separat ausgebildeten Kühlmittelkreislauf in einem Wärmeaustausch stehen kann. Die Kühlmittel-Kreisläufe werden in Abhängigkeit einer Betriebsart, wie beispielsweise ein Heizbetrieb, ein Kühlbetrieb oder ein Enteisungsbetrieb, mit Wärmetauschern bestimmter Fahrzeugaggregate verschaltet. Je nach einer an dem Fahrzeugaggregat zur Verfügung stehenden Wärme wird der Kühlmittel-Kreislauf aktiviert oder deaktiviert. Dazu wird die an dem Fahrzeugaggregat zur Verfügung stehende Wärme mittels thermischer Messfühler erfasst.

Nachteilig bei den vorgenannten Heiz-/Kühlvorrichtungen ist jedoch, dass eine Verschaltung des Kühlmittel-Kreislaufs erst bei Vorliegen einer vorgegebenen Temperatur bzw. Temperaturdifferenz erfolgt, so dass eine solche Heiz-/Kühlvorrichtung relativ träge ist und ein Teil der an dem Fahrzeugaggregat bereits zur Verfügung stehenden Wärme oder Kälte nicht genutzt werden kann. Ferner können stark schwankende Wärmequellen und/oder Wärmesenken eines Fahrzeugs, wie zum Beispiel die Abwärme einer Fahrzeugbremse, aufgrund der Trägheit des Systems nicht effizient in die Heiz-/Kühlvorrichtung eingebunden werden. Darüber hinaus sind zur Überwachung der Fahrzeugaggregate zahlreiche Temperatursensoren erforderlich, die das Heiz-/Kühlsystem relativ kostenintensiv machen.

Des Weiteren ist aus der WO 01/34953 A1 ein Verfahren zur Steuerung und Regelung von Wärmeströmen in Kraftfahrzeugen bekannt, bei dem einerseits das Thermomanagement des Motorkühlsystems geregelt wird und andererseits die Wärmeströme der Klimaanlage berücksichtigt werden. Die Kopplung dieser beiden Regelungen erfolgt über ein CAN-Bus-System. So sollen die im Kraftfahrzeug vorhandenen Wärmeströme in Abhängigkeit vorausliegender Betriebszustände geregelt werden. Wie diese Regelungen der Kühlmittelströme konkret erfolgen sollen, wird nicht offenbart.

Der Erfindung liegt daher die Aufgabe zugrunde, ein Thermo-Steuerungssystem bereitzustellen, das zur Reduktion der Energieaufwendungen für die Klimatisierung eines Fahrzeuginnenraums eine effektive und kostengünstige Nutzung der an einem Fahrzeug vorhandenen Wärmequellen und/oder Wärmesenken ermöglicht. Ferner soll ein Verfahren bereitgestellt werden, mit dem ein solches Thermo-Steuerungssystem betrieben werden kann.

Die Lösung der Aufgabe erfolgt erfindungsgemäß durch ein Thermo-Steuerungssystem mit den Merkmalen des Anspruchs 1 sowie ein Verfahren mit den Merkmalen des Anspruchs 8.

Erfindungsgemäß weist das Thermo-Steuerungssystem eine Detektierungseinrichtung zum Detektieren zumindest einer fahrer- oder fahrzeugseitigen Aktivierung des Fahrzeugaggregats auf, die zumindest eine Sensoreinheit umfasst, wobei die Ansteuerungseinrichtung zum Ansteuern des Kühlmittel-Kreislaufs durch die Detektierungseinrichtung aktivierbar bzw. ansteuerbar ist. Insbesondere kann die Ansteuerungseinrichtung in Abhängigkeit eines Ausgangssignals der Detektierungseinrichtung verschaltet sein.

Die Detektierungseinrichtung kann die Aktivierung insbesondere solcher Fahrzeugaggregate detektieren, die bzw. bei denen aufgrund der Aktivierung in naher Zukunft eine für einen Wärmeaustausch mit dem Kühlmittel geeignete Wärmequelle oder Wärmesenke zur Verfügung gestellt werden kann. Dazu ist die Detektierungseinrichtung bevorzugt an einem Ort platziert, an dem die Aktivierung eines jeweiligen Fahrzeugaggregats relativ schnell erfasst werden kann. Unter dem Begriff "Aktivierung" ist vorliegend eine Ansteuerung bzw. ein Vorgang zu verstehen, bei dem ein Betriebszustand des Fahrzeugaggregats beispielsweise durch einen Fahrzeugführer oder automatisiert durch eine Fahrzeugsteuerung eingeleitet, angepasst bzw. geändert wird. Demzufolge kann vorliegend auch ein Abschalten oder Deaktivieren eines Fahrzeugaggregats unter dem Begriff Aktivierung verstanden werden. Als Beispiel sei ein Betätigen eines Bremspedals genannt, wodurch eine Aktivierung einer Fahrzeugbremse veranlasst wird, so dass das Fahrzeug verzögert werden kann. Das Detektieren erfolgt in diesem Fall unmittelbar bei der Aktivierung, also mit Betätigung des Bremspedals. Es sollte deutlich sein, dass jedes beliebige Fahrzeugaggregat als Wärmequelle oder Wärmesenke in die Heiz-/Kühlvorrichtung integriert werden kann. Beispielsweise kann das Fahrzeugaggregat eine Fahrzeugbremse oder ein Bremsenergie-Rückgewinnungs-Generator sein.

Die Ansteuerungseinrichtung umfasst insbesondere einen Signaleingang, über den die Ansteuerungseinrichtung mit der Detektierungseinrichtung verbunden ist, und einen Signalausgang, der mit zumindest einer Kühlmittel-Pumpe und/oder einem Kühlmittel-Ventil verbunden ist. Bei einem Detektieren einer Aktivierung des Fahrzeugaggregats wird erfindungsgemäß ein Signal von der Detektierungseinrichtung an die Ansteuerungseinrichtung ausgegeben. An der Ansteuerungseinrichtung wird sodann ein dem Eingangssignal korrespondierendes Ausgangssignal an den Kühlmittel-Kreislauf ausgegebenen und das Kühlmittel entsprechend eines Bedarfs zur Klimatisierung des Fahrzeuginnenraums zu einem Wärmetauscher des aktivierten Fahrzeugaggregats geleitet. Dadurch kann der Kühlmittel-Kreislauf unmittelbar nach Aktivierung, und somit noch zeitlich bevor an dem jeweiligen Fahrzeugaggregat überhaupt eine für einen Wärmeaustausch geeignete Temperatur erfassbar ist, mit dem Fahrzeugaggregat verschaltet werden. Folglich kann bereits bei Beginn der Entstehung einer Temperaturdifferenz ein Wärmeaustausch zwischen dem Fahrzeugaggregat und dem Kühlmittel stattfinden. Ein Aufheizen oder Abkühlen des jeweiligen Fahrzeugaggregats kann vollständig unterbunden werden, da die Wärme bzw. Kälte unmittelbar an das Kühlmittel übertragen wird. Dadurch kann eine deutliche Steigerung der Energieeffizienz der Heiz-/Kühlvorrichtung und insbesondere bei Elektro- oder Hybridfahrzeugen eine Steigerung der Reichweite des Fahrzeugs bewirkt werden.

Die Sensoreinheit ist als eine Strommesseinrichtung zur Messung eines an einem Elektromotor fließenden elektrischen Stroms ausgebildet.

Dadurch kann insbesondere bei Elektro- oder Hybridfahrzeugen die Abwärme des Elektromotors effektiv für das Heiz-/Kühlvorrichtung genutzt werden. Ferner kann durch eine Messung eines in einem Generator, beispielsweise eines Bremsenergie-Rückgewinnungssystems, fließenden elektrischen Stroms ein Bremsvorgang relativ schnell detektiert und die Abwärme effektiv genutzt werden.

Vorzugsweise ist die Detektierungseinrichtung geeignet, eine Intensität und/oder zeitliche Dauer der Aktivierung des Fahrzeugaggregats zu detektieren. Dadurch kann die Detektierungseinrichtung Informationen zur Ermittlung einer möglichen zukünftigen Wärme- bzw. Kälteentwicklung an dem jeweiligen Fahrzeugaggregat bereitstellen, so dass eine Prognose über die Effektivität einer Verschaltung des Kühlmittel-Kreislaufs mit einem jeweiligen Fahrzeugaggregat-Wärmetauscher erstellt werden kann. Beispielsweise kann anhand von Daten über eine Bremsdauer und Bremsintensität eine Aussage darüber getroffen werden, welche Temperaturen an der Bremse in naher Zukunft zu erwarten sind. Alternativ kann anhand der Daten über einen elektrischen Stromfluss eine Aussage über eine an einem Elektromotor in naher Zukunft entstehende Temperatur erfolgen. Dadurch kann das Thermo-Steuerungssystem besonders effektiv betrieben werden. Darüber hinaus kann die Detektierungseinrichtung geeignet sein, eine intervallartig wiederkehrende Aktivierung des Fahrzeugaggregats zu detektieren. Dadurch kann die Detektierungseinrichtung eine erst in der Zukunft erfolgende Aktivierung eines Fahrzeugaggregats erfassen. Dadurch kann insbesondere die Aktivierung funktional zusammenhängender Fahrzeugaggregate in relativ einfacher Weise detektiert werden.

Optional weist die Detektierungseinrichtung zusätzlich eine Verarbeitungseinheit auf. Die Verarbeitungseinheit kann eine zentrale Steuerelektronik sein, in der die Signale der einzelnen Sensoreinheiten empfangen und zentral verarbeitet werden. Dadurch kann das Thermo-Steuerungssystem besonders einfach aufgebaut und kostengünstig in der Herstellung und Montage sein.

Eine weitere Sensoreinheit kann als eine Volumenstrommesseinrichtung zur Messung eines Volumenstroms ausgebildet sein. Insbesondere kann die Sensoreinheit als eine Kraftstoffmesseinrichtung zur Messung eines in einen Verbrennungsmotor geleiteten Kraftstoffflusses ausgebildet sein. Somit kann die Abwärme des Verbrennungsmotors besonders effektiv für die Heiz-/Kühlvorrichtung genutzt werden. Insbesondere bei Hybridfahrzeugen mit einem Elektromotor und einem Verbrennungsmotor, bei denen der Verbrennungsmotor erst bei Bedarf zu dem Fahrzeugantrieb hinzu geschalten werden kann, ist eine solche Kraftstoffmesseinrichtung zur Reduktion der Energieaufwendungen für die Klimatisierung des Fahrzeuginnenraums besonders hilfreich. Darüber hinaus kann die Sensoreinheit zur Messung eines Gas- bzw. Luftstroms geeignet sein, wie beispielsweise eines Zuluftstroms in den Fahrzeuginnenraum oder eines Gasstroms in einen gasbetriebenen Verbrennungsmotor. Ferner kann die Sensoreinheit zur Messung eines zu Kühlzwecken nutzbaren Kondenswasserstroms verwendbar sein. Dadurch kann ein an dem Fahrzeug aufgefangenes Kondenswasser ohne thermische Verluste unmittelbar zur Kühlung des Fahrzeuginnenraums genutzt werden.

Ferner kann eine weitere Sensoreinheit als eine Schalterbetätigungsmesseinrichtung zur Messung einer Betätigung eines Schalters oder Pedals ausgebildet sein, insbesondere als eine Druckmesseinrichtung zur Messung eines Betätigungsdrucks des Pedals. Dadurch kann in relativ einfacher Weise eine in naher Zukunft entstehende Abwärme, beispielsweise an den Bremsen, detektiert werden. Eine solche Sensoreinheit ist besonders einfach aufgebaut und kostengünstig in Herstellung und Montage. Zudem kann das Aktivieren eines Fahrzeugaggregats in einem sehr frühen Stadium detektiert werden.

Vorzugsweise weist das Thermo-Steuerungssystem eine Berechnungseinrichtung, in der zumindest ein Kennfeld und/oder eine Formel hinterlegt ist, über die eine Temperatur des Fahrzeugaggregats in einem definierten Zeitabstand voraussagbar ist. Insbesondere weist das Thermo-Steuerungssystem eine Berechnungseinrichtung zur Berechnung einer in Abhängigkeit der detektierten Aktivierung des Fahrzeugaggregats an dem Fahrzeugaggregat in naher Zukunft anliegenden Temperatur bzw. Temperaturdifferenz auf. "In naher Zukunft" bedeutet, dass die Aktivierung des Fahrzeugaggregats und eine darauf folgende Temperaturänderung in einem unmittelbaren zeitlichen Zusammenhang stehen, insbesondere in einer relativ kurzen zeitlichen Differenz. Insbesondere kann ein Ermitteln einer konkreten Temperatur in Abhängigkeit der detektierten Aktivierung in einem definierten Zeitabstand bzw. Zeitintervall erfolgen. Beispielsweise kann die Berechnungseinrichtung mittels des hinterlegten Kennfeldes eine an einer Fahrzeugbremse vorherrschende konkrete Temperatursteigerung in einem definierten Zeitintervall ermitteln. Besonders bevorzugt kann die exakte an dem Fahrzeugaggregat entstehende oder zukünftig vorherrschende Temperatur bzw. eine Temperaturänderung ermittelt werden. Dadurch kann eine Prognose über die Effektivität einer Verschaltung des Kühlmittel-Kreislaufs mit einem jeweiligen Fahrzeugaggregat-Wärmetauscher erstellt werden und erst bei Vorliegen einer berechneten, ausreichenden Effizienz eine tatsächliche Verschaltung des Kühlmittel-Kreislaufs vorgenommen werden. Die Ansteuerungseinrichtung ist hierbei bevorzugt in Abhängigkeit der Berechnungseinrichtung verschaltet. Dadurch kann das Thermo-Steuerungssystem besonders effektiv sein. Die Berechnungseinrichtung kann mit einem fahrzeugseitigen Steuergerät verbunden sein, von dem die Berechnungseinrichtung weitere Daten zur Berechnung der an dem Fahrzeugaggregat in naher Zukunft vorherrschenden Temperatur abrufen kann. Beispielsweise können von der Berechnungseinrichtung Daten über eine Umgebungstemperatur, einer Kühlmitteltemperatur, eines Kraftstoffverbrauchs zusätzlich zu den Daten eines Stromflusses zur Berechnung herangezogen werden. Dadurch kann eine besonders exakte Prognose über die Effektivität der Verschaltung erstellt werden.

Zur Datenübertragung kann das Thermo-Steuerungssystem ein Kommunikations-Bussystem aufweisen. Dadurch können die Signale mehrerer Sensoreinheiten in relativ einfacher und sicherer Weise an die Verarbeitungseinheit der Detektierungseinrichtung gesendet werden. Die Ausgangssignale der Ansteuerungseinrichtung können ebenfalls über ein Kommunikations-Bussystem an die einzelnen Kühlmittel-Ventile und/oder die Kühlmittel-Pumpe gesendet werden. Dadurch wird ein Datenfluss relativ sicher und eine Rückmeldung über getätigte Vorgänge in relativ einfacher Weise ermöglicht. Das Kommunikations-Bussystem kann ein fahrzeugseitig bereits vorhandenes System sein, in das das Thermo-Steuerungssystem integriert bzw. aufgenommen werden kann.

Das Thermo-Steuerungssystem kann als eine separate Steuerungseinheit ausgebildet und/oder als eine Software in ein Fahrzeugsteuerungsgerät integriert sein. Das als separate Steuerungseinheit ausgebildete Thermo-Steuerungssystem kann mit dem Fahrzeugsteuerungsgerät verschaltet sein. Dadurch kann die Herstellung und Montage des Thermo-Steuerungssystems relativ einfach und kostengünstig sein.

Das erfindungsgemäße Verfahren zur prädiktiven Steuerung und/oder Regelung einer Heiz-/Kühlvorrichtung zum Klimatisieren eines Fahrzeuginnenraums, wobei die Heiz-/Kühlvorrichtung einen von einem Kühlmittel durchströmbaren Kühlmittel-Kreislauf aufweist, der für einen Wärmeaustausch zwischen dem Kühlmittel und einem Fahrzeugaggregat mit einem Fahrzeugaggregat-Wärmetauscher verschaltbar ist, sieht die folgenden Schritten vor: kontinuierliches Überwachen eines Wärmebedarfs zum Klimatisieren des Fahrzeuginnenraums, Detektieren zumindest einer Aktivierung des Fahrzeugaggregats, insbesondere einer Beschleunigung oder Verzögerung des Fahrzeugs, mittels einer Detektierungseinrichtung, die zumindest eine Sensoreinheit umfasst, die als eine Strommesseinrichtung zur Messung eines elektrischen Stroms ausgebildet ist und Ansteuern einer Kühlmittel-Pumpe und/oder eines Kühlmittel-Ventils des Kühlmittel-Kreislaufs zum Leiten des Kühlmittels in einen Fahrzeugaggregat-Wärmetauscher.

Vorzugsweise erfolgt vor dem Ansteuern der Kühlmittel-Pumpe und/oder des Kühlmittel-Ventils eine Voraussage einer Temperatur des Fahrzeugaggregats in einem definierten Zeitabstand. Insbesondere erfolgt ein Ermitteln einer zukünftigen Temperatur des Fahrzeugaggregats in Abhängigkeit der detektierten Aktivierung des Fahrzeugaggregats. Dies erfolgt bevorzugt in der Berechnungseinrichtung anhand der von einer Detektierungseinrichtung sowie optional von einem fahrzeugseitigen Steuergerät zur Verfügung gestellten Daten. Dadurch kann eine thermische Energiebereitstellung an einem Fahrzeugaggregat besonders genau ermittelt werden und für eine Ansteuerung, ob das Kühlmittel zu einem jeweiligen Fahrzeugaggregat-Wärmetauscher geleitet wird oder nicht, herangezogen werden. Dazu ist die Ansteuerungseinrichtung bevorzugt in Abhängigkeit der Berechnungseinrichtung verschaltet.

Vorzugsweise erfolgt ein kontinuierliches Überwachen des Fahrzeugaggregats. Beispielsweise wird die Fahrzeuggeschwindigkeit kontinuierlich überwacht. Dadurch können der Berechnungseinrichtung weitere Einflussgrößen zur Verfügung gestellt werden und zur Ansteuerung der Kühlmittel-Ventile verwendet werden. So kann beispielsweise durch die Überwachung der Geschwindigkeit festgestellt werden, ob das Fahrzeug in einem Stadtbetrieb, bei dem die Fahrzeugbremse häufig betätigt wird und somit eine potentielle Wärmequelle darstellen kann, oder in einem Autobahnbetrieb bewegt wird, bei dem eine größere Abwärme des Motors zu erwarten ist.

Bei Detektieren eines erhöhten Kraftstoffflusses in einem Verbrennungsmotor kann das Kühlmittel in einen Wärmetauscher des Verbrennungsmotors geleitet werden, und/oder bei Detektieren eines erhöhten Stromflusses in einem Elektromotor kann das Kühlmittel in einen Wärmetauscher des Elektromotors geleitet werden. Dadurch kann die Abwärme der Fahrzeugantriebsvorrichtungen besonders effektiv zur Klimatisierung des Fahrzeuginnenraums verwendet werden.

Bei Detektieren eines Bremspedaldrucks wird das Kühlmittel vorzugsweise in einen Wärmetauscher einer Fahrzeugbremse und/oder eines Generator eines Energierückgewinnungssystems geleitet. Dadurch kann die Abwärme der Fahrzeugverzögerungsvorrichtungen besonders effektiv zur Klimatisierung des Fahrzeuginnenraums verwendet werden.

Nachfolgend wird die Erfindung anhand einer bevorzugten Ausführungsform unter Bezugnahme auf die anliegenden Zeichnungen näher erläutert.

Figur 1 zeigt eine Verschaltung des Thermo-Steuerungssystems in einer Heiz-/Kühlvorrichtung in einer schematischen Darstellung,

Figur 2 zeigt schematisch die Ablaufvorgänge zur Nutzung von an einem Fahrzeugaggregat entstehender Wärme zur Klimatisierung eines Fahrzeuginnenraums.

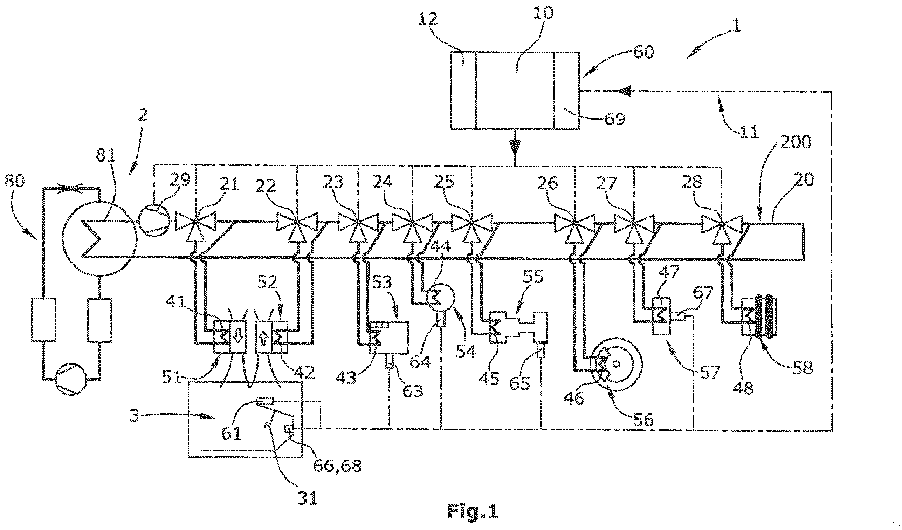

In der Figur 1 ist ein Thermo-Steuerungssystem 1 in einer Heiz-/Kühlvorrichtung 2 eines nicht näher dargestellten Fahrzeugs gezeigt. Mit 3 ist ein Ausschnitt eines Fahrzeuginnenraums, insbesondere eines Fahrer-Fußraums mit einem Pedal 31, gekennzeichnet.

Die Heiz-/Kühlvorrichtung 2 umfasst in dieser Ausgestaltung einen als Wärmepumpe oder Kältemaschine verschaltbaren Kältemittel-Kreislauf 80 und einen mit dem Kältemittel-Kreislauf 80 über einen Kältemittel-Kühlmittel-Wärmetauscher 81 in einem Wärmeaustausch bringbaren Kühlmittel-Kreislauf 20. Der Kältemittel-Kreislauf 80 und der Kühlmittel-Kreislauf 20 sind jeweils mit einer durchgezogenen, dicken Linie dargestellt.

Der Kühlmittel-Kreislauf 20 wird von einem Kühlmittel 200 durchströmt, welches von einer Kühlmittel-Pumpe 29 angetrieben wird. Der Kühlmittel-Kreislauf 20 ist über jeweils ein Kühlmittel-Ventil 21, 22, 23, 24, 25, 26, 27, 28 mit einem Fahrzeugaggregat-Wärmetauscher 41, 42, 43, 44, 45, 46, 47, 48 eines Fahrzeugaggregats 51, 52, 53, 54, 55, 56, 57, 58 verschaltbar. Eine mehrfache Verschaltung bzw. eine Kombination von Verschaltungen ist selbstverständlich möglich und in bestimmten Fällen vorteilhaft. Es sollte deutlich sein, dass für sämtliche Verschaltungen als Grundvoraussetzung ein im Kühlmittel-Kreislauf 20 vorliegender Bedarf an Wärme bzw. Kälte ist. Unter dem Begriff Verschaltung ist vorliegend eine Einbindung einer Kühlmittel-Nebenleitung, in der ein Fahrzeugaggregat-Wärmetauscher 41, 42, 43, 44, 45, 46, 47, 48 angeordnet ist, in den Kühlmittel-Kreislauf 20 zu verstehen.

Das Thermo-Steuerungssystem 1 zur prädiktiven Steuerung und/oder Regelung der Heiz-/Kühlvorrichtung 2, insbesondere des Kühlmittel-Kreislauf 20, umfasst eine Detektierungseinrichtung 60, eine Ansteuerungseinrichtung 10 sowie eine Berechnungseinrichtung 12.

Die Detektierungseinrichtung 60 umfasst mehrere Sensoreinheiten 61, 62, 63, 64, 65, 66, 67, 68 sowie eine Verarbeitungseinheit 69. Die Sensoreinheiten 61, 62, 63, 64, 65, 66, 67, 68 sind jeweils über eine elektrische Leitung, die in der Figur 1 mit einer Strich-Punkt-Linie dargestellt ist, zur Signalübertragung untereinander und mit der zentralen Verarbeitungseinheit 69 verbunden. Die Signalübertragung kann beispielsweise über ein Kommunikationsbussystem erfolgen. In der Verarbeitungseinheit 69 werden die Ausgangssignale der Sensoreinheiten 61, 62, 63, 64, 65, 66, 67, 68 erfasst, verarbeitet und ein Ausgangssignal an eine Ansteuerungseinrichtung 10 zum Ansteuern der Kühlmittel-Ventile 21, 22, 23, 24, 25, 26, 27, 28 ausgegeben. Dies erfolgt ebenfalls über eine als Strich-Punkt-Linie dargestellte Verbindung. In der zusätzlich angeordneten Berechnungseinrichtung 12 wird anhand der von den Sensoreinheiten 61, 62, 63, 64, 65, 66, 67, 68 zur Verfügung gestellten Informationen eine an einem Fahrzeugaggregat-Wärmetauscher 41, 42, 43, 44, 45, 46, 47, 48 jeweils voraussichtlich entstehende Wärmebereitstellung berechnet und somit eine optimale Verschaltung, insbesondere Verschaltungskombination der Kühlmittel-Ventile 21, 22, 23, 24, 25, 26, 27, 28 ermöglicht.

Der Kühlmittel-Kreislauf 20 ist über ein erstes Kühlmittel-Ventil 21 mit einem Zuluft-Wärmetauscher 41 einer Zulufteinrichtung 51 verschaltbar, wobei das Kühlmittel 200 hierbei mit einem in den Fahrzeuginnenraum 3 einströmenden Zuluftstrom in einen Wärmeaustausch gebracht werden kann. Über ein zweites Kühlmittel-Ventil 22 ist der Kühlmittel-Kreislauf 20 mit einem Abluft-Wärmetauscher 42 einer Ablufteinrichtung 52 verschaltbar, wobei das Kühlmittel 200 hierbei mit einem aus dem Fahrzeuginnenraum 3 ausströmenden Abluftstrom in einen Wärmeaustausch bringbar ist. Die Verschaltung 104 des Kühlmittel-Kreislaufs 20 mit dem Zuluft- bzw. Abluft-Wärmetauscher 41, 42 erfolgt insbesondere dann, wenn - wie oben bereits genannt - in der Heiz-/Kühlvorrichtung 2 ein Bedarf an Wärme bzw. Kälte vorliegt und eine Betätigung 101 eines Klimageräts zur Klimatisierung des Fahrzeuginnenraums 3 durch eine Sensoreinheit 61 detektiert wird.

über ein drittes Kühlmittel-Ventil 23 ist der Kühlmittel-Kreislauf 20 für einen Wärmeaustausch 105 mit einem Verbrennungsmotor-Wärmetauscher 43 eines Verbrennungsmotors 53 verschaltbar. Die Verschaltung 104 des Kühlmittel-Kreislaufs 20 mit dem Verbrennungsmotor-Wärmetauscher 43 erfolgt insbesondere dann, wenn durch die Sensoreinheit 63 ein Kraftstofffluss in den Verbrennungsmotor 53 detektiert wird. Alternativ kann die Sensoreinheit 63 eine Druckbetätigung 101 an einem Fahr- bzw. Gaspedal 31 detektieren und die zuvor genannte Verschaltung 104 bewirken.

Über ein viertes Kühlmittel-Ventil 24 ist der Kühlmittel-Kreislauf 20 für einen Wärmeaustausch 105 mit einem Elektromotor-Wärmetauscher 44 eines Elektromotors 54 verschaltbar. Die Verschaltung 104 des Kühlmittel-Kreislaufs 20 mit dem Elektromotor-Wärmetauscher 44 erfolgt insbesondere dann, wenn durch die Sensoreinheit 64 ein Detektieren 102 eines Stromflusses in dem Elektromotor 54 erfolgt. Alternativ kann auch die Sensoreinheit 64 als ein Drucksensor ausgebildet sein, der eine Druckbetätigung 101 an einem Fahr- bzw. Gaspedal 31 detektieren kann. In diesem Fall ist nur eine Sensoreinheit 63, 64 für die Verschaltung 104 des Kühlmittel-Kreislaufs 20 mittels des dritten und vierten Ventils 23, 24 erforderlich.

Über ein fünftes Kühlmittel-Ventil 25 ist der Kühlmittel-Kreislauf 20 für einen Wärmeaustausch 105 mit einem Getriebe-Wärmetauscher 45 eines Fahrzeuggetriebes 55 verschaltbar. Die Verschaltung 104 des Kühlmittel-Kreislaufs 20 mit dem Getriebe-Wärmetauscher 45 erfolgt insbesondere dann, wenn die Sensoreinheit 65 eine Abwärme an dem Fahrzeuggetriebe 55 oder einen Kraftstofffluss in den Verbrennungsmotor 53 detektiert.

Über ein sechstes Kühlmittel-Ventil 26 ist der Kühlmittel-Kreislauf 20 für einen Wärmeaustausch 105 mit einem Bremsen-Wärmetauscher 46 einer Fahrzeugbremse 56 verschaltbar. Die Verschaltung 104 des Kühlmittel-Kreislaufs 20 mit dem Bremsen-Wärmetauscher 46 erfolgt insbesondere dann, wenn die Sensoreinheit 66 eine Druckbetätigung 101 eines Bremspedals 31 detektiert, Bei einer solchen Detektion 102 kann der Kühlmittel-Kreislauf 20 über ein siebtes Kühlmittel-Ventil 27 zusätzlich mit einem Generator-Wärmetauscher 47 eines Bremsenergie-Rückgewinnungssystems 57 verschaltet werden. Dazu kann ferner eine weitere Sensoreinheit 67 an dem Generator 57 des Bremsenergie-Rückgewinnungssystems 57 angeordnet sein, wobei die Sensoreinheit 67 ein Detektions-Ausgangssignal in Abhängigkeit eines in dem Generator 57 fließenden Stroms sendet.

Über ein achtes Kühlmittel-Ventil 28 ist der Kühlmittel-Kreislauf 20 für einen Wärmeaustausch 105 mit einem Kupplungs-Wärmetauscher 48 einer Fahrzeugkupplung 58 verschaltbar. Die Verschaltung 104 des Kühlmittel-Kreislaufs 20 mit dem Kupplungs-Wärmetauscher 48 erfolgt insbesondere dann, wenn die Sensoreinheit 68 eine Druckbetätigung 101 an einem Kupplungspedal 31 detektiert. Bei einer Kupplungsautomatik kann die Sensoreinheit 68 auch in einer nicht dargestellten Kupplungselektronik angeordnet sein, in der bei einem Kupplungsvorgang ein Stromfluss messbar ist.

Es sollte deutlich sein, dass der Kältemittel-Kreislauf 80 und der Kühlmittel-Kreislauf 20 sehr viel umfangreicher sein können als in der Figur 1 dargestellt, insbesondere können weitere, nicht dargestellte Wärmetauscher und zusätzliche Kühlmittel-Kreisläufe vorgesehen sein.

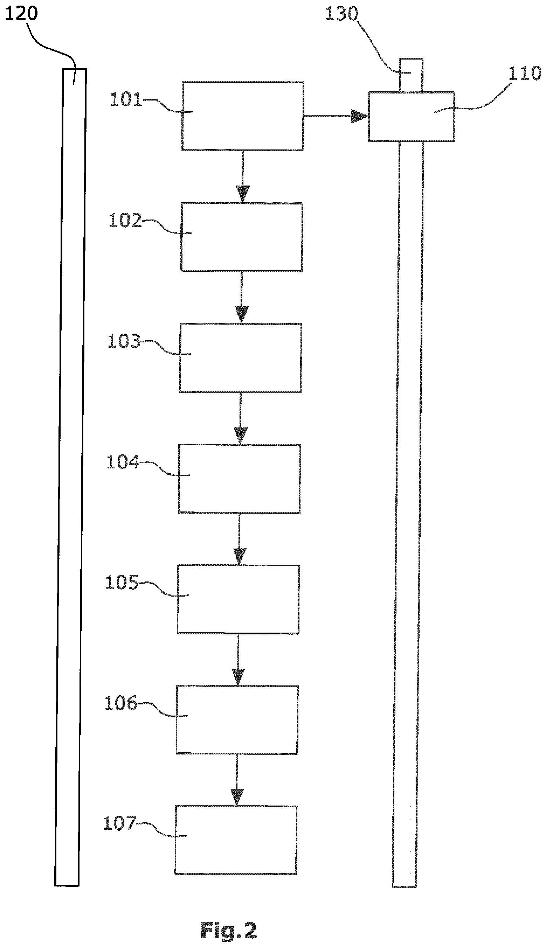

In der Figur 2 sind schematisch die Ablaufvorgänge zur Nutzung von an einem Fahrzeugaggregat 51, 52, 53, 54, 55, 56, 57, 58 entstehender Wärme zur Klimatisierung eines Fahrzeuginnenraums 3 gezeigt. Der Ablauf wird - wie folgt - anhand eines Beispiels erläutert, wobei in diesem Beispiel angenommen wird, dass die Heiz-/Kühlvorrichtung 2 in einem Heizmodus zum Beheizen des Fahrzeuginnenraums 3 betrieben wird.

Die Heiz-/Kühlvorrichtung 2, insbesondere der Kältemittel-Kreislauf 80, wird entsprechend einer gewünschten Fahrzeuginnenraum-Temperatur hinsichtlich der Leistungsfähigkeit und Effektivität von dem Thermo-Steuerungssystem 1 kontinuierlich überwacht, was in der Figur 2 mit dem Bezugszeichen 120 dargestellt ist. Liegt in dem Kältemittel-Kreislauf 80 bzw. dem Kühlmittel-Kreislauf 20 ein Bedarf an einem Wärmeaustausch 106, 107 vor, beispielsweise zur Erwärmung des Kältemittel-Kreislauf 80 über den Kältemittel-Kühlmittel-Wärmetauscher 81, wird die Möglichkeit einer Verschaltung 104 des Kühlmittel-Kreislauf 20 mit den Fahrzeugaggregat-Wärmetauschern 41, 42, 43, 44, 45, 46, 47, 48 freigegeben. Eine tatsächliche Verschaltung 104 des Kühlmittel-Kreislaufs 20 erfolgt jedoch in Abhängigkeit eines Detektierens 102 einer Aktivierung 101 eines Fahrzeugaggregats 51, 52, 53, 54, 55, 56, 57, 58. Daher erfolgt ein zusätzliches Überwachen 130 der Fahrzeugaggregate 51, 52, 53, 54, 55, 56, 57, 58 wobei eine Änderung des Zustands eines der Fahrzeugaggregate 51, 52, 53, 54, 55, 56, 57, 58 zum Beispiel für einen Bremsvorgang 110, jederzeit detektierbar ist und eine Verschaltung 104 des Kühlmittel-Kreislaufs 20 bewirken kann.

Bei einem Einleiten 101 einer Änderung des Fahrzeug-Betriebszustands 110, wie ein Bremsvorgang, das heißt bei Betätigen des Bremspedals, erfolgt ein Detektieren 102 durch den Pedal-Drucksensor 66. Von der Sensoreinheit 66 wird ein Signal an die Verarbeitungseinheit 69 gesendet.

Von der Verarbeitungseinheit 69 wird das Signal in einem nachfolgenden Schritt 103 zunächst in die Berechnungseinrichtung 12 weitergeleitet, in der in Abhängigkeit der Bremsintensität und Bremsdauer eine mögliche Wärmebereitstellung berechnet wird. Bei einer vorrausichtlich ausreichenden Wärmebereitstellung erfolgt ein Rückmeldesignal an die Verarbeitungseinheit 69 bzw. Ansteuerungseinrichtung 10.

An der Ansteuerungseinrichtung 10 erfolgt ein Ausgeben eines Signals zur Ansteuerung 104 der Kühlmittel-Pumpe 29 sowie des Kühlmittel-Ventils 26 zum Leiten des Kühlmittels 200 in den Bremsen-Wärmetauscher 46 der Fahrzeugbremse 56. An der Fahrzeugbremse 56 kann somit aufgrund einer Temperaturdifferenz zwischen Bremse 56 und Kühlmittel 200 bereits kurz nach Betätigung 101 der Bremse 56 ein effektiver Wärmeaustausch 105 stattfinden. Über den Bremsen-Wärmetauscher 46 erfolgt daher eine besonders effektive Wärmeübertragung 105 von der Fahrzeugbremse 56 an das Kühlmittel 200. Dadurch kann bereits vor bzw. mit der Entstehung von Abwärme das Kühlmittel 200 zur Wärmeaufnahme 105 gezielt in den Bremsen-Wärmetauscher 46 geleitet werden.

Das erwärmte Kühlmittel 200 wird sodann in den Kältemittel-Kühlmittel-Wärmetauscher 81 geleitet, in dem das Kühlmittel 200 die aufgenommene Wärme an das Kältemittel des Kältemittel-Kreislaufs 80 abgeben kann. Dies erfolgt in dem Schritt 106. Der Kältemittel-Kreislauf 80 kann nunmehr in bekannter Weise mit einem nicht dargestellten luftüberströmten Wärmetauscher verschaltet sein, in dem eine Wärmeübertragung 107 von dem Kältemittel des Kältemittel-Kreislaufs 80 zu einer in den Fahrzeuginnenraum 3 geführten Zuluft erfolgen kann.

Anhand der Figuren 1 und 2 wird im Folgenden in einem weiteren Beispiel eine Kombinationsmöglichkeit der Fahrbetriebszustände 110 und/oder der Verschaltung 104 beschrieben. Hierzu sei wiederum angenommen, dass die Heiz-/Kühlvorrichtung 2 in einem Heizmodus zum Beheizen des Fahrzeuginnenraums 3 betrieben wird.

Ein Aktivieren bzw. Einleiten 101 eines Anlassens 110 des Fahrzeugmotors 53 wird unmittelbar über die Sensoreinheit 63 detektiert, so dass der Kühlmittel-Kreislauf 20 über das dritte Kühlmittel-Ventil 23 mit dem Verbrennungsmotor-Wärmetauscher 43 grundsätzlich verschaltet werden könnte. In der Berechnungseinrichtung 12 kann jedoch mittels hinterlegter Verbrennungsmotor-Kennfelder und/oder Berechnungs-Formeln ermittelt werden, dass an dem Verbrennungsmotor 53 noch keine ausreichende Wärme bereitgestellt werden kann, beispielsweise weil - wie vorliegend der Fall - der Verbrennungsmotor 53 erst kürzlich gestartet wurde. Der Kühlmittel-Kreislauf 20 wird daher in diesem Fall noch nicht mit dem Verbrennungsmotor-Wärmetauscher 43 verschaltet.

In einem nächsten Schritt 101 wird ein Bremsvorgang 110 eingeleitet, was von der Sensoreinheit 66 in dem Schritt 102 detektiert wird. Folglich wird ein Signal von der Sensoreinheit 66 an die Verarbeitungseinheit 69 bzw. in die Berechnungseinrichtung 12 gesendet.

In der Berechnungseinrichtung 12 wird im Schritt 103 mittels der hinsichtlich der Fahrzeugbremse hinterlegten Kennfelder und/oder Formeln ermittelt, dass an der Bremse 56 eine ausreichende Wärmebereitstellung vorhanden ist, so dass die Ansteuerungseinrichtung 10 eine Verschaltung 104 des Kühlmittels 200 sowohl zu dem Bremsen-Wärmetauscher 46 als auch zu dem Generator-Wärmetauscher 47 veranlasst. Zudem wird in diesem Fall in der Berechnungseinrichtung 12 ermittelt, dass das Fahrzeug sich aufgrund der Bremsintensität und Bremsdauer in einer Tal- bzw. Bergabfahrt und der Fahrzeugmotor 53 sich in einem Schubbetrieb befindet. Diese Informationen kann die Berechnungseinrichtung 12 alternativ von einem Fahrzeugsteuergerät erhalten. Das Kühlmittel 200 wird nach Berechnung dieser entstehenden Wärmequelle in dem Schritt 104 für einen Wärmeaustausch 105 zusätzlich auch mit dem Getriebe-Wärmetauscher 45, dem Verbrennungsmotor-Wärmetauscher 43 und optional mit dem Kupplungs-Wärmetauscher 48 verschaltet.

Nunmehr wird in einem neuen Schritt 101 ein Lösen der Bremsen 110 durch die Sensoreinheit 66 detektiert. Diese Information wird über ein Senden eines gesonderten Signals oder ein Auslassen des Signals von der Sensoreinheit 61, 62, 63, 64, 65, 66, 67, 68 an die Verarbeitungseinheit 69 bzw. an die Berechnungseinrichtung 12 übermittelt. Sodann erfolgt in Schritt 103 in der Berechnungseinrichtung 12 eine erneute Einschätzung der zukünftigen Wärmebereitstellung an den jeweiligen Fahrzeugaggregaten 51, 52, 53, 54, 55, 56, 57, 58. Die in diesem Beispiel geschalteten Ventile 23, 25, 26, 27, 28 bleiben dabei solange in der geschalteten Stellung, in der das Kühlmittel 200 zu einem jeweiligen Fahrzeugaggregat-Wärmetauscher 43, 45, 46, 47, 48 geleitet werden, bis ein durch die Berechnungseinrichtung 12 rechnerisch ermittelter oder durch einen Sensor 63, 65, 66, 67, 68 erfasster Wärmeaustausch 105 nicht mehr effektiv ist.

Das erwärmte Kühlmittel 200 wird wiederum in den Kältemittel-Kühlmittel-Wärmetauscher 81 geleitet, in dem das Kühlmittel 200 die aufgenommene Wärme an den Kältemittel-Kreislauf 80 abgeben kann, der wiederum die Wärme zur Beheizung des Fahrzeuginnenraums 3 an einen Zuluftstrom abgibt.

Für einen besonders kurzen und schnellen Weg der Wärmeübertragung von zumindest einem Fahrzeugaggregat 51, 52, 53, 54, 55, 56, 57, 58 zu dem Fahrzeuginnenraum 3 kann der Kühlmittel-Kreislauf 20 anstatt mit dem Kältemittel-Kühlmittel-Wärmetauscher 81 über das Ventil 21 direkt mit dem Zuluft-Wärmetauscher 51 verschaltet werden, über den das Kühlmittel 200 mit dem in den Fahrzeuginnenraum 3 geleiteten Zuluftstrom in einen Wärmeaustausch 106 gebracht werden kann. Ferner kann bei einer geeigneten Verschaltung 104 der Heiz-/Kühlvorrichtung 2 der Kühlmittel-Kreislauf 20 über das Ventil 21 mit einem Abluft-Wärmetauscher 52 verschaltet sein.

Durch das zuvor beschriebene Thermo-Steuerungssystem und Verfahren, insbesondere das Detektieren einer in der Entstehung befindlichen Wärmequelle oder Wärmesenke eines Fahrzeugaggregats, kann die Heiz-/Kühlvorrichtung besonders effektiv betrieben werden und dadurch die Reichweite eines Fahrzeugs vergrößert werden.

## Patentansprüche

1. Thermo-Steuerungssystem (1) zur prädiktiven Steuerung und/oder Regelung einer Heiz-/Kühlvorrichtung (2) zum Klimatisieren eines Fahrzeuginnenraums (3),
wobei die Heiz-ZKühlvorrichtung (2) einen von einem Kühlmittel (200) durchströmbaren Kühlmittel-Kreislauf (20) aufweist, der für einen Wärmeaustausch zwischen dem Kühlmittel (200) und einem Fahrzeugaggregat (51, 52, 53, 54, 55, 56, 57, 58) mit einem Fahrzeugaggregat-Wärmetauscher (41, 42, 43, 44, 45, 46, 47, 48) verschaltbar ist,
und das Thermo-Steuerungssystem (1) eine Ansteuerungseinrichtung (10) zum Ansteuern einer Kühlmittel-Pumpe (29) und/oder zumindest eines Kühlmittel-Ventils (21, 22, 23, 24, 25, 26, 27, 28) des Kühlmittel-Kreislaufs (20) aufweist,
**dadurch gekennzeichnet, dass**
das Thermo-Steuerungssystem (1) eine Detektierungseinrichtung (60) zum Detektieren (102) einer Aktivierung (101) des Fahrzeugaggregats (51, 52, 53, 54, 55, 56, 57, 58) aufweist, die zumindest eine Sensoreinheit (61, 62, 63, 64, 65, 66, 67, 68) umfasst, die als eine Strommesseinrichtung zur Messung eines elektrischen Stroms ausgebildet ist, und die Ansteuerungseinrichtung (10) durch die Detektierungseinrichtung (60) aktivierbar ist.

2. Thermo-Steuerungssystem (1) nach Anspruch 1, **dadurch gekennzeichnet, dass** die Detektierungseinrichtung (60) geeignet ist, eine Intensität und/oder Dauer der Aktivierung (101) des Fahrzeugaggregats (51, 52, 53, 54, 55, 56, 57, 58) zu detektieren.

3. Thermo-Steuerungssystem (1) nach einem der vorhergehenden Ansprüche, **dadurch gekennzeichnet, dass** eine weitere Sensoreinheit (61, 62, 63, 64, 65, 66, 67, 68) als eine Volumenstrommesseinrichtung zur Messung eines Volumenstroms ausgebildet ist.

4. Thermo-Steuerungssystem (1) nach einem der vorhergehenden Ansprüche, **dadurch gekennzeichnet, dass** eine weitere Sensoreinheit (61, 62, 63, 64, 65, 66, 67, 68) als eine Schalterbetätigungsmesseinrichtung zur Messung einer Betätigung eines Schalters und/oder Pedals (31) ausgebildet ist.

5. Thermo-Steuerungssystem (1) nach einem der voranstehenden Ansprüche, **dadurch gekennzeichnet, dass** das Thermo-Steuerungssystem (1) eine Berechnungseinrichtung (12) aufweist, in der zumindest ein Kennfeld und/oder eine Formel hinterlegt sind, über die eine Temperatur des Fahrzeugaggregats (51, 52, 53, 54, 55, 56, 57, 58) in einem definierten Zeitabstand voraussagbar ist.

6. Thermo-Steuerungssystem (1) nach einem der voranstehenden Ansprüche, **dadurch gekennzeichnet, dass** das Thermo-Steuerungssystem (1) ein Kommunikations-Bussystem (11) zur Datenübertragung aufweist.

7. Thermo-Steuerungssystem (1) nach einem der voranstehenden Ansprüche, **dadurch gekennzeichnet, dass** das Thermo-Steuerungssystem (1) als eine separate Steuerungseinheit und/oder als eine in ein Fahrzeugsteuerungsgerät integrierte Software ausgebildet ist.

8. Verfahren zur prädiktiven Steuerung und/oder Regelung einer Heiz-/Kühlvorrichtung (2) zum Klimatisieren eines Fahrzeuginnenraums (3), wobei die Heiz-/Kühlvorrichtung (2) einen von einem Kühlmittel (200) durchströmbaren Kühlmittel-Kreislauf (20) aufweist, der für einen Wärmeaustausch zwischen dem Kühlmittel (200) und einem Fahrzeugaggregat (51, 52, 53, 54, 55, 56, 57, 58) mit einem Fahrzeugaggregat-Wärmetauscher (41, 42, 43, 44, 45, 46, 47, 48) verschaltbar ist,
mit den folgenden Schritten:
- Überwachen (120) eines Wärmebedarfs zum Klimatisieren des Fahrzeuginnenraums (3),
- Detektieren (102) einer Aktivierung (101) des Fahrzeugaggregats (51, 52, 53, 54, 55, 56, 57, 58) mittels einer Detektierungseinrichtung (60), die zumindest eine Sensoreinheit (61, 62, 63, 64, 65, 66, 67, 68) umfasst, die als eine Strommesseinrichtung zur Messung eines elektrischen Stroms ausgebildet ist,
- Ansteuern (104) einer Kühlmittel-Pumpe (29) und/oder eines Kühlmittel-Ventils (21, 22, 23, 24, 25, 26, 27, 28) des Kühlmittel-Kreislaufs (20) zum Leiten des Kühlmittels (200) in den Fahrzeugaggregat-Wärmetauscher (41, 42, 43, 44, 45, 46, 47, 48).

9. Verfahren nach Anspruch 8, **dadurch gekennzeichnet, dass** vor dem Ansteuern (104) der Kühlmittel-Pumpe (29) und/oder des Kühlmittel-Ventils (21, 22, 23, 24, 25, 26, 27, 28) eine Voraussage einer Temperatur des Fahrzeugaggregats (51, 52, 53, 54, 55, 56, 57, 58) in einem definierten Zeitabstand erfolgt.

10. Verfahren nach einem der Ansprüche 8 oder 9, **dadurch gekennzeichnet, dass** ein kontinuierliches Überwachen (130) des Fahrzeugaggregats (51, 52, 53, 54, 55, 56, 57, 58) erfolgt.

11. Verfahren nach einem der Ansprüche 8 bis 10, **dadurch gekennzeichnet, dass** bei Detektieren (102) eines Kraftstoffflusses (101) das Kühlmittel (200) in einen Verbrennungsmotor-Wärmetauscher (43) geleitet wird und/oder bei Detektieren (102) eines Stromflusses (101) das Kühlmittel (200) in einen Elektromotor/Generator-Wärmetauscher (44, 47) geleitet wird.

12. Verfahren nach einem der Ansprüche 8 bis 11, **dadurch gekennzeichnet, dass** bei Detektieren (102) einer Betätigung (101) eines fahrzeugseitigen Schalters oder Pedals (31) das Kühlmittel (200) in einen Bremsen-Wärmetauscher (46), einen Generator-Wärmetauscher (47) und/oder einen Kupplungs-Wärmetauscher (48) geleitet wird.

## Claims

1. Thermal control system (1) for predictive control and/or regulation of a heating/cooling device (2) for air-conditioning a vehicle interior (3),
wherein the heating/cooling device (2) comprises a coolant circuit (20) through which a coolant (200) can flow and which can be connected with a vehicle component heat exchanger (41, 42, 43, 44, 45, 46, 47, 48) for a heat exchange between the coolant (200) and a vehicle component (51, 52, 53, 54, 55, 56, 57, 58)
and the thermal control system (1) comprises a control device (10) for controlling a coolant pump (29) and/or at least one coolant valve (21, 22, 23, 24, 25, 26, 27, 28) of the coolant circuit (20),
**characterized in that**
the thermal control system (1) comprises a detection device (60) for detecting (102) an activation (101) of the vehicle component (51, 52, 53, 54, 55, 56, 57, 58), which comprises at least one sensor unit (61, 62, 63, 64, 65, 66, 67, 68) configured as a current measuring device for measuring an electric current, and the control device (10) can be activated by the detection device (60).

2. Thermal control system (1) according to claim 1,
**characterized in that**
the detection device (60) is adapted to detect an intensity and/or duration of activation (101) of the vehicle component (51, 52, 53, 54, 55, 56, 57, 58).

3. Thermal control system (1) according to one of the preceding claims, **characterized in that**
a further sensor unit (61, 62, 63, 64, 65, 66, 67, 68) is configured as a volumetric throughflow measuring device for measuring a volumetric throughflow.

4. Thermal control system (1) according to one of the preceding claims, **characterized in that**
a further sensor unit (61, 62, 63, 64, 65, 66, 67, 68) is configured as a switch actuation measuring device for measuring an actuation of a switch and/or pedal (31).

5. Thermal control system (1) according to one of the preceding claims, **characterized in that**
the thermal control system (1) comprises a calculation device (12) in which at least one characteristic diagram and/or a formula are stored, by means of which a temperature of the vehicle component (51, 52, 53, 54, 55, 56, 57, 58) can be predicted at a defined time interval.

6. Thermal control system (1) according to one of the preceding claims, **characterized in that**
the thermal control system (1) comprises a communication bus system (11) for data transmission.

7. Thermal control system (1) according to one of the preceding claims, **characterized in that**
the thermal control system (1) is configured as a separate control unit and/or as software integrated into a vehicle control unit.

8. Method for predictive control and/or regulation of a heating/cooling device (2) for air-conditioning a vehicle interior (3),
wherein the heating/cooling device (2) comprises a coolant circuit (20) through which a coolant (200) can flow and which can be connected to a vehicle component heat exchanger (41, 42, 43, 44, 45, 46, 47, 48) for heat exchange between the coolant (200) and a vehicle component (51, 52, 53, 54, 55, 56, 57, 58),
with the following steps:
- monitoring (120) a heat demand for air-conditioning the vehicle interior (3),
- detecting (102) an activation (101) of the vehicle component (51, 52, 53, 54, 55, 56, 57, 58) by means of a detecting device (60) comprising at least one sensor unit (61, 62, 63, 64, 65, 66, 67, 68) configured as a current measuring device for measuring an electric current,
- activating (104) a coolant pump (29) and/or a coolant valve (21, 22, 23, 24, 25, 26, 27, 28) of the coolant circuit (20) for directing the coolant (200) into the vehicle component heat exchanger (41, 42, 43, 44, 45, 46, 47, 48).

9. Method according to claim 8,
**characterized in that**,
before the coolant pump (29) and/or the coolant valve (21, 22, 23, 24, 25, 26, 27, 28) are activated (104), a prediction of a temperature of the vehicle component (51, 52, 53, 54, 55, 56, 57, 58) is made at a defined time interval.

10. Method according to one of claims 8 or 9,
**characterized in that**
continuous monitoring (130) of the vehicle component (51, 52, 53, 54, 55, 56, 57, 58) is carried out.

11. Method according to any one of claims 8 to 10,
**characterized in that**
when detecting (102) a fuel flow (101), the coolant (200) is directed into an internal combustion engine heat exchanger (43) and/or when detecting (102) a current flow (101), the coolant (200) is directed into an electric motor/generator heat exchanger (44, 47).

12. Method according to any one of claims 8 to 11,
**characterized in that**
when an actuation (101) of a vehicle-side switch or pedal (31) is detected (102), the coolant (200) is directed into a brake heat exchanger (46), a generator heat exchanger (47) and/or a clutch heat exchanger (48).

## Revendications

1. Système de contrôle thermique (1) pour la commande et/ou la régulation prédictive d'un appareil de chauffage/refroidissement (2) pour la climatisation d'un intérieur de véhicule (3),
l'appareil de chauffage/refroidissement (2) comprenant un circuit de fluide de refroidissement (20) pouvant être traversé par un fluide de refroidissement (200), qui peut être connecté pour un échange de chaleur entre le fluide de refroidissement (200) et un agrégat de véhicule (51, 52, 53, 54, 55, 56, 57, 58) avec un échangeur de chaleur d'agrégat de véhicule (41, 42, 43, 44, 45, 46, 47, 48),
et le système de contrôle thermique (1) comprend un moyen de commande (10) pour commander une pompe à réfrigérant (29) et/ou au moins une vanne à réfrigérant (21, 22, 23, 24, 25, 26, 27, 28) du circuit de réfrigérant (20),
**caractérisé en ce que**
le système de contrôle thermique (1) comprend un moyen de détection (60) pour détecter (102) une activation (101) de l'agrégat de véhicule (51, 52, 53, 54, 55, 56, 57, 58), qui comprend au moins une unité de détection (61, 62, 63, 64, 65, 66, 67, 68) qui est conçue comme un moyen de mesure de courant pour mesurer un courant électrique, et le moyen de commande (10) peut être activé par le moyen de détection (60).

2. Système de contrôle thermique (1) selon la revendication 1, **caractérisé en ce que** le moyen de détection (60) est apte à détecter une intensité et/ou une durée d'activation (101) de l'agrégat de véhicule (51, 52, 53, 54, 55, 56, 57, 58).

3. Système de contrôle thermique (1) selon l'une des revendications précédentes, **caractérisé en ce qu'**une autre unité de détection (61, 62, 63, 64, 65, 66, 67, 68) est configurée comme un moyen de mesure de flux volumique pour mesurer un flux volumique.

4. Système de contrôle thermique (1) selon l'une des revendications précédentes, **caractérisé en ce qu'**une autre unité de détection (61, 62, 63, 64, 65, 66, 67, 68) est configurée comme un moyen de mesure d'actionnement de commutateur pour mesurer un actionnement d'un commutateur et/ou d'une pédale (31).

5. Système de contrôle thermique (1) selon l'une des revendications précédentes, **caractérisé en ce que** le système de contrôle thermique (1) comprend un dispositif de calcul (12) dans lequel sont déposés au moins un diagramme caractéristique et/ou une formule permettant de prédire une température de l'agrégat de véhicule (51, 52, 53, 54, 55, 56, 57, 58) dans un intervalle de temps défini.

6. Système de contrôle thermique (1) selon l'une des revendications précédentes, **caractérisé en ce que** le système de contrôle thermique (1) comprend un système de bus de communication (11) pour la transmission de données.

7. Système de contrôle thermique (1) selon l'une des revendications précédentes, **caractérisé en ce que** le système de contrôle thermique (1) est conçu comme une unité de commande séparée et/ou comme un software intégré dans un appareil de commande de véhicule.

8. Méthode de commande et/ou de régulation prédictive d'un appareil de chauffage/refroidissement (2) pour climatiser l'intérieur d'un véhicule (3),
l'appareil de chauffage/refroidissement (2) comprenant un circuit de fluide de refroidissement (20) pouvant être traversé par un fluide de refroidissement (200) et pouvant être connecté à un échangeur de chaleur d'agrégat de véhicule (41, 42, 43, 44, 45, 46, 47, 48) pour un échange de chaleur entre le fluide de refroidissement (200) et un agrégat de véhicule (51, 52, 53, 54, 55, 56, 57, 58),
comprenant les opérations suivantes :
- Surveiller (120) une demande de chaleur pour climatiser l'intérieur de véhicule (3),
- Détection (102) d'une activation (101) de l'agrégat de véhicule (51, 52, 53, 54, 55, 56, 57, 58) au moyen d'un moyen de détection (60) qui comprend au moins une unité de détection (61, 62, 63, 64, 65, 66, 67, 68) qui est conçue comme un moyen de mesure de courant pour mesurer un courant électrique,
- Commande (104) d'une pompe à fluide de refroidissement (29) et/ou d'une vanne à fluide de refroidissement (21, 22, 23, 24, 25, 26, 27, 28) du circuit de fluide de refroidissement (20) pour diriger le fluide de refroidissement (200) dans l'échangeur de chaleur de l'agrégat de véhicule (41, 42, 43, 44, 45, 46, 47, 48).

9. Méthode selon la revendication 8, **caractérisée en ce qu'**une prédiction d'une température de l'agrégat de véhicule (51, 52, 53, 54, 55, 56, 57, 58) est effectuée à un intervalle de temps défini avant la commande (104) de la pompe de liquide de refroidissement (29) et/ou de la vanne de liquide de refroidissement (21, 22, 23, 24, 25, 26, 27, 28).

10. Méthode selon l'une des revendications 8 ou 9, **caractérisée en ce qu'**on effectue une surveillance (130) en continu de l'agrégat de véhicule (51, 52, 53, 54, 55, 56, 57, 58).

11. Méthode selon l'une des revendications 8 à 10, **caractérisée en ce que**, lors de la détection (102) d'un flux de carburant (101), le fluide de refroidissement (200) est dirigé vers un échangeur thermique (43) de moteur à combustion interne et/ou, lors de la détection (102) d'un flux d'électricité (101), le fluide de refroidissement (200) est dirigé vers un échangeur thermique (44, 47) de moteur électrique/générateur.

12. Méthode selon l'une des revendications 8 à 11, **caractérisée en ce que**, lors de la détection (102) d'un actionnement (101) d'un commutateur ou d'une pédale (31) du véhicule, le fluide de refroidissement (200) est dirigé dans un échangeur de chaleur de frein (46), un échangeur de chaleur de générateur (47) et/ou un échangeur de chaleur d'embrayage (48).
